(19)

**Europäisches Patentamt**
**European Patent Office**
**Office européen des brevets**

(11) **EP 4 716 147 A1**

(12) **EUROPEAN PATENT APPLICATION**

(43) Date of publication:
**25.03.2026 Bulletin 2026/13**

(21) Application number: **24383018.9**

(22) Date of filing: **23.09.2024**

(51) International Patent Classification (IPC):
**H04L 9/08** $^{(2006.01)}$    **H04B 10/70** $^{(2013.01)}$

(52) Cooperative Patent Classification (CPC):
**H04L 9/0852; H04B 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Fundació Institut de Ciències Fotòniques**
  **08860 Castelldefels (Barcelona) (ES)**
• **Institució Catalana de Recerca I Estudis Avançats**
  **08010 Barcelona (ES)**
• **LuxQuanta Technologies S.L.**
  **08860 Castelldefels (ES)**

(72) Inventors:
• **Acin, Antonio**
  **08860 CASTELLDEFELS (ES)**
• **Navarro, Mariana**
  **08860 CASTELLDEFELS (ES)**
• **Oudot, Enky**
  **08860 CASTELLDEFELS (ES)**
• **Steffinlongo, Anna**
  **08860 CASTELLDEFELS (ES)**

(74) Representative: **Grünecker Patent- und Rechtsanwälte**
**PartG mbB**
**Leopoldstraße 4**
**80802 München (DE)**

(54) **DEVICE-INDEPENDENT QUANTUM KEY DISTRIBUTION USING HERALDED SINGLE-PHOTON ENTANGLEMENT**

(57)    A method of exchanging private communication in a network system, the network system including at least two communication units, and a central station; each communication unit including a photon source, a beam splitter, and a measurement device; the central station including a further beam splitter and two photo detectors; the method comprising: for each communication unit, preparing, by the communication unit, a photon; sending the prepared photon to the beam splitter of the communication unit, the beam splitter defining two optical modes; sending one of the two optical modes to the central station; sending the other one of the two optical modes to the measurement device of the communication unit; combining, at the central station, the optical modes received from each communication unit using the further beam splitter, the further beam splitter providing two output modes; measuring, by the two photo detectors, the output modes provided by the further beam splitter; in case exactly one of the two photo detectors clicks, announcing the result of the measurement, thereby preparing a single-photon entangled state for the respective other one of the two optical modes of each communication unit; measuring the other one of the two optical modes by the respective measurement device of each communication unit, to observe a violation of a Bell inequality; and generating a secret key based on the observed Bell non-local correlations.

FIG. 1

**Description**

**Field of Invention**

The present invention relates to a new scheme for implementing device-independent quantum key distributions, DIQKD.

**Background of the invention**

Exchanging private communication in a network is a central feature of the modern world. Classical protocols are based on computational security, as secrecy relies on computational assumptions. Quantum key distribution, QKD, provides quantum physical security, an alternative solution in which two parties measure quantum states and obtain correlated classical bits, from which a secure key is constructed. No computational assumptions are needed, as these quantum correlations can be such that external adversaries cannot be correlated with the measurement outcomes, even when considering access to infinite computational power. The security of standard QKD protocols, however, relies on assumptions on the physics of the quantum devices used to distribute the key. In particular it requires that these devices behave in the exact manner described by the underlying QKD protocol. In practice, verifying that these assumptions are met is challenging, as it demands accurate characterization of quantum states and measurements throughout the execution of the QKD protocol. In fact, by exploiting inaccurate quantum device calibrations, side-channel attacks have been successfully performed against QKD systems.

In view of this problem, device-independent QKD, DIQKD, protocols have been introduced. These protocols use the violation of a Bell inequality to bind the information that adversaries may obtain on the distributed key, without requiring any modelling of the devices used in the protocol. DIQKD protocols therefore offer stronger security, as they are robust against any hacking attacks exploiting imperfections on the devices.

The implementation of DIQKD is challenging, since it requires the distribution of high-quality entangled states over long distances, as well as high-efficiency transmission channels and measurements. As photons in fibers are the natural carriers of quantum information, channel losses represent the main challenge for DIQKD: growing exponentially with distance, they become already at short distances too large for the honest users to be able to observe any Bell inequality violation. To circumvent channel losses, a heralding scheme may be used, where entanglement is generated between the parties' systems conditioned on the detection of photons at a central heralding station performing a joint measurement. Losses therefore reduce the key generation rate, but not its security.

J. Kolodyński et al, "Device-independent quantum key distribution with single-photon sources", Quantum 4, 260 (2020) present a proposal for DIQKD implementation that uses single-photon sources to generate heralded correlations between the honest users, Alice and Bob. The secret key is established through two-photon correlations, which implies that the key generation rate is proportional to the channel transmittance.

M. Lucamarini et al, "Overcoming the rate-distance barrier of quantum key distribution without using quantum repeaters", Nature 557, 400 (2018), propose an implementation of standard QKD known as twin-field, TF-QKD. This implementation is based on single-photon interference, which implies that the key generation rate is significantly higher than in previous schemes as it is proportional to the square root of the channel transmittance. However, it is not device-independent and therefore requires a precise modelling of the devices used in the protocols. In particular, it requires a perfect knowledge of the prepared states.

In view of the above, it is an object of the present invention to alleviate the above-mentioned problems by designing a scheme for DIQKD based on single-photon interference. This provides a robust solution for achieving secure key distribution over long distances under minimal assumptions.

**Summary**

The present invention addresses the above-mentioned object by providing a method of exchanging private communication in a network system, as well as a network system configured for private communication.

According to a first aspect, the present invention discloses a method of exchanging private communication in a network system, the network system including at least two communication units, and a central station; each communication unit including a single-photon source, a beam splitter, and a measurement device; the central station including a further beam splitter and two photo detectors; the method comprising: for each communication unit, preparing, by the communication unit, a photon; sending the prepared photon to the beam splitter of the communication unit, the beam splitter defining two optical modes; sending one of the two optical modes to the central station; sending the other one of the two optical modes to the measurement device of the communication unit; combining, at the central station, the optical modes received from each communication unit using the further beam splitter, the further beam splitter providing two output modes; measuring, by the two photo detectors, the output modes provided by the further beam splitter; in case exactly one of the two photo detectors clicks, announcing the result of the measurement, thereby preparing a single-photon entangled state for the respective other one of the two optical modes of each communication unit; measuring the other one of the two optical modes by the respective measurement device of each communication unit, to observe a violation of a Bell inequality; and generating a secret key based on the observed Bell non-local correlations.

According to an implementation of the method of the first aspect, preparing the photon by the respective communication unit may be performed either on demand or heralded.

According to an implementation of the method of the first aspect, each beam splitter of the respective communication unit as well as the further beam splitter may have varying transmittance.

According to an implementation of the method of the first aspect, the other one of the two optical modes is an incoming mode for the respective measurement device, wherein measuring the incoming mode may comprise: preparing a mode to be measured by a displacement step displacing the incoming mode and then measuring the mode to be measured.

According to an implementation of the method of the first aspect, preparing the mode to be measured may further include: a squeezing step of squeezing the incoming mode either before or else after the displacement step.

According to an implementation of the method of the first aspect, observing a violation of a Bell inequality may be performed using a Clauser-Horne-Shimony-Holt, CHSH, inequality, c.f. J. F. Clauser, M. A. Horne, A. Shimony, and R. A. Holt, Phys. Rev. Lett. 23, 880 (1969).

According to an implementation of the method of the first aspect, the distance between each of the communication units and the central station may be the same, respectively.

According to an implementation of the method of the first aspect, the further beam splitter may be a balanced beam splitter.

The present invention further provides a second aspect of a network system configured for private communication, comprising at least two communication units, wherein each communication unit including a single-photon source, a beam splitter, and a measurement device; a central station including a further beam splitter and two photo detectors; wherein each communication unit is configured to: prepare a photon; send the prepared photon to the beam splitter of the communication unit, wherein the beam splitter is configured to define two optical modes; send one of the two optical modes to the central station; send the other one of the two optical modes to the measurement device of the communication unit; wherein the central station is configured to combine the optical modes received from each communication unit using the further beam splitter, wherein the further beam splitter is configured to provide two output modes; wherein each of the two photo detectors is configured to measure one of the output modes provided by the further beam splitter; wherein in case only one of the two photo detectors clicks the central station is configured to announce the result of the measurement in case exactly one of the two photo detectors clicks, thereby preparing a single-photon entangled state for the respective other one of the two optical modes of each communication unit; and the respective measurement device of each communication unit is configured to measure the other one of the two optical modes by the respective measurement device of each communication unit, to observe a violation of a Bell inequality; and the respective measurement device of each communication unit is configured to generate a secret key based on the observed Bell non-local correlations.

According to an implementation of the system of the second aspect, the respective communication unit may be configured to prepare the photon either on demand or heralded.

According to an implementation of the system of the second aspect, each beam splitter of the respective communication unit as well as the further beam splitter may have varying transmittance.

According to an implementation of the system of the second aspect, the other one of the two optical modes is an incoming mode for the respective measurement device, wherein each of the measuring devices may be configured to: prepare a mode to be measured by a displacement step displacing the incoming mode and then to measure the mode to be measured.

According to an implementation of the system of the second aspect, each of the measuring devices may be configured to: prepare the mode to be measured by including a squeezing step of squeezing the incoming mode either before or else after the displacement step.

According to an implementation of the system of the second aspect, each of the measuring devices may be configured to observe a violation of a Bell inequality by using a CHSH inequality.

According to an implementation of the system of the second aspect, the distance between each of the communication units and the central station may be the same, respectively.

According to an implementation of the system of the second aspect, the further beam splitter may be a balanced beam splitter.

**Brief description of the drawings**

FIG. 1: illustrates a setup for the implementation of DIQKD using single-photon entanglement.

FIG. 2: illustrates measurements by Alice and Bob to observe Bell nonlocal correlations and generate the secret key; wherein the incoming mode is first displaced, then squeezed and finally measured with a photo-detector.

FIG. 3: illustrates measurements by Alice and Bob to observe Bell nonlocal correlations and generate the secret key; wherein the incoming mode is first squeezed, then displaced and finally measured with a photo-detector.

FIG. 4 illustrates estimated finite-size key rates for realistic parameter and comparison with the previous proposal using two-photon entanglement.

## Description

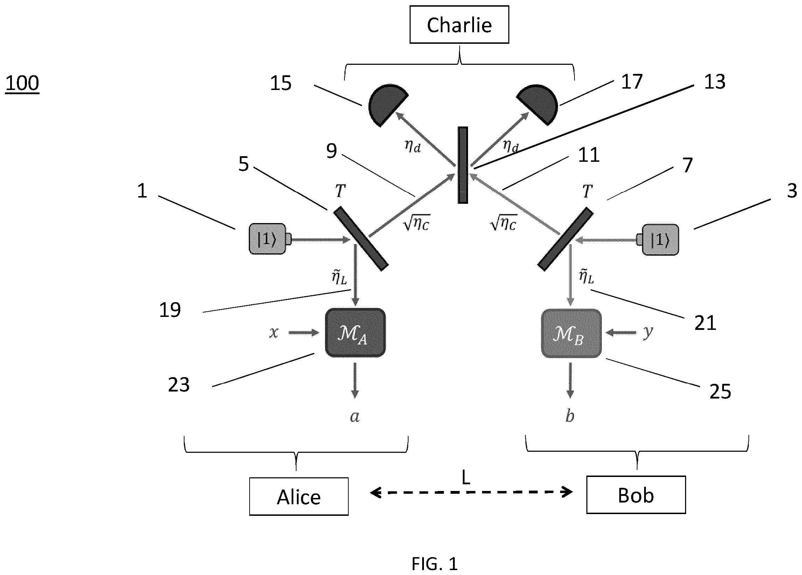

FIG. 1 illustrates an embodiment of the proposed implementation according to an embodiment of the present disclosure. The implementation as shown in FIG. 1 works with photons.

FIG. 1 illustrates communication between user Alice and user Bob, in the following in short only referred to as Alice and Bob. Alice and Bob are assumed to be honest users. For illustrative purposes, Alice is shown on the left hand side of the figure whereas Bob is shown on the right hand side of the figure but the skilled person will readily understand that roles and/or sides could be exchanged.

In the scenario depicted in FIG. 1, Alice and Bob each prepare a photon. For preparing a photon, Alice and Bob each have a single photon source 1, 3, respectively. That is, single photon source 1 relates to Alice, single photon source 3 relates to Bob. The single photon sources 1 and 3 may be the same or may be different, however for the sake of simplicity the following will assume that these single photon sources are the same. Examples for the single photon sources may be single photon sources using quantum dots and/or heralded spontaneous parametric down-conversion.

For the setup illustrated in FIG. 1, the photon preparation process may be on demand or heralded, but the users need to know that the single photon has been produced with probability p. For the sake of simplicity, we discuss in what follows the situation in which $p = 1$. For noisy sources where $p$ is not one, it is easy to modify the security analysis below to include this parameter and positive key rates are obtained for large enough values of p.

Each of the single photon sources 1 and 3 emit photons. The photons emitted by single photon source 1, i.e. the photons emitted by Bob, are directed towards a beam splitter 5. The photons emitted by single photon source 3 are emitted towards a beam splitter 7. Each of the beam splitters 5, 7 may be the same or may be different. However, for the sake of simplicity the following will assume that these beam splitter 5, 7 are the same. Each of these beam splitters 5, 7 has transmittance T, respectively.

The transmittance T of the beam splitters 5, 7 may be assumed to be a free parameter of the protocol that may be tuned to optimize the key rate.

Summarizing, the photons emitted by the single photon sources 1, 3 are sent to corresponding beam splitters 5, 7, wherein the beam splitters 5, 7 may have varying transmittance. Thereby, each beam splitter 5, 7 defines two optical modes, respectively, i.e. two modes per each beam splitter.

One of two optical modes at each location, i.e. for users Alice or Bob, is sent to a central station or central user denoted Charlie, hereinafter only referred to as Charlie. Thus, for Alice, one optical mode is sent through a corresponding lossy channel 9 towards Charlie. As shown in FIG. 1, the other optical mode, i.e. the reflected mode related to Alice may be sent through another lossy channel 19 towards measurement system 23, the measurement system 23 corresponding to Alice. The measurement system 23 is also denoted by $M_A$ in FIG. 1. Likewise, for Bob, one optical mode is sent through a corresponding lossy channel 11 towards Charlie. As shown in FIG. 1, the other optical mode, i.e. the reflected mode related to Bob may be sent through a further lossy channel 21 towards the measurement system 25, the measurement system 25 corresponding to Bob. The measurement system 25 is also denoted by $M_B$ in FIG. 1.

For simplicity, it is assumed that the central station, i.e. Charlie, is placed at half the distance L between Alice and Bob.

The efficiency of a channel directly connecting Alice and Bob, cf. the dashed line in FIG. 1, may be denoted by $\eta_C$. Its dependence on the distance is given by

$$\eta_c = 10^{-\alpha_{att}L/10} \qquad (1)$$

where L indicates the distance between Alice and Bob, and $\alpha_{att}$ denotes the attenuation coefficient of the medium through which the photons travel. For optical fibers at telecommunication wavelengths, $\alpha_{att}$ is typically 0.2 dB/km. Since the distance between each of the honest users on the one hand, i.e. Alice and Bob, and Charlie on the other hand is L/2, the efficiency of the corresponding channels are the same and equal to $\sqrt{\eta_c}$.

At Charlie's station, the two modes, i.e. the one sent by Alice, the other one sent by Bob, are combined with a beam splitter 13. The beam splitter 13, again, may have a varying transmittance. The beam splitter 13 may be a balanced beam splitter. The beam splitter 13 may erase the path information, i.e. the information related to the paths on which the photons were received by Charlie. The beam splitter 13, again, will have two output modes and these output modes are measured by photo detectors 15 and 17, respectively. The efficiency of the photo detectors 15 and 17 may be denoted by $\eta_D$.

Charlie then announces the result of the measurement. Charlie only keeps those instances, i.e. measurement results, where only one of the two detectors 15 or 17 clicks whereas the respective other detector remains silent. That is, Charlie discards measurement results where both detectors 15 and 17 click - or likewise whenever none of the detectors 15 and 17 clicks. Here, clicking of a detector refers to the respective photo detector, 15 or 17, signaling that a photon incident on the detector was detected. Ideally, these measurements should count the number of photons, although standard photo-detectors detecting merely the presence of absence of incident photons, much simpler and cheaper, are sufficient.

When the transmittance T of Alice and Bob's beam splitters are small, a click signaled by one of Charlie's detectors, 15 or 17, heralds a state $|\psi>_H$

$$|\psi>_H = \frac{1}{\sqrt{2}}(|10> +|01>)_{AB} \qquad (2)$$

between users Alice and Bob at leading order of the transmittance T, because T is chosen small enough such that the probability that one photon has been transmitted in Alice or Bob's locations and detected by Charlie is much larger than the probability that the two photons are sent to Charlie and one is detected. At first order in T, a successful heralding happens with probability $P_H = T \eta_H$, with $\eta_H = \eta_D\sqrt{\eta_C}$. In equation (2), Alice and Bob are indicated by the index AB.

In other words, in FIG. 1, we consider a symmetric situation in which the efficiencies between the honest users and the central location are the same and equal to $\eta_H$, and the local efficiencies in Alice and Bob' locations are also the same but equal to $\eta_L$. To simplify, we also take equal transmittance for their beam splitters, 5 and 7, to be small and equal to T, while the beam splitter 13 at the central location is balanced. Under these assumptions, the state shared between Alice and Bob is, at leading order, equal to, expressed in the photon-number basis by equation (2) given above.

The reason is as follows: when a click at the central location is observed, the two most relevant terms contributing to it are:

(i) one of the two photons by Alice and Bob is transmitted and arrives to the central station, where it is measured,
(ii) the two photons are transmitted, but only one of them arrives to the detector and is measured.

The probability of the first event is $T(1 - T)\eta_H$ while for the second is $T^2\eta_H(1 - \eta_H)$. If one takes T sufficiently small, so that T << (1 - T), the probability of the first event is much larger, so the click in the central detection announces that one photon remains with Alice or Bob. However, the information about from where the photon originated has been erased by the central balanced beam splitter 13 of station Charlie, such that the state between Alice and Bob is the one in equation (2). This state (2) is therefore produced with a rate that scales with $\eta_H$. As the central measurement is located at half distance between Alice and Bob and losses increase exponentially with distance, one has $\eta_H = \eta_D\sqrt{\eta_C}$, where $\eta_D$ is the efficiency of the photon-counters 15, 17 and $\eta_C$ is the total transmittance of the channel directly connecting Alice and Bob. That is, the rate scales as the square root of the total transmittance, as announced.

As indicated above, the entangled state as given by equation (2) is sent through a respective lossy channel 19, 21, towards the measurement devices $M_A$ and $M_B$ on Alice and Bob's locations to establish the secret key. The lossy channels 19 and 21 may have an efficiency $\widetilde{\eta_L}$.

Again, in other words, the result of the measurement by station Charlie is announced and the round is conserved whenever one of the two detectors clicks which is equivalent to one photon in total is measured when using the photon-counters 15, 17 of Charlie. Otherwise the result is discarded. The result of the measurement by Charlie, whenever the event is not discarded, prepares a single-photon entangled state that depends on the channels losses and the beam splitter transmittances.

The second optical mode at each node, Alice and Bob, is measured to produce quantum correlations that violate a Bell inequality. The obtained correlated measurement results are used to distill the secret key through standard post-processing techniques. These techniques usually consist of error correction and privacy amplification, but may also include a pre-processing step to increase the key rate, or other key distillation techniques such as advantage distillation. The measurements on Alice and Bob are chosen to maximize the generated the key rate between them and depend on the available technology and the parameters of the setup.

Alice and Bob measure this state to produce Bell nonlocal correlations, that is, violating a Bell inequality, from which they can construct the secret key. Any scheme producing these Bell nonlocal correlations may be sufficient.

In a further embodiment of the present disclosure, for measurement and establishing the secret key, the measurement devices may use a protocol based on the violation of the CHSH inequality. In this protocol, Alice (Bob) applies two (three) measurements, labeled by $x \in 1; 2$ ($y \in 1; 2; 3$), all with two possible outcomes, labeled by $a, b = \pm 1$. Here, $A_x$ and $B_y$ are used to denote the quantum observable measured by Alice and Bob. Rounds with $x = 1$ and $y = 3$ are referred to as key rounds and are used to construct the key. It is therefore required that these measurements give correlated results between Alice and Bob.

Rounds with $x \in 1; 2$ and $y \in 1; 2$ are referred to as test rounds, and use to compute the CHSH Bell expression

$$S = \; < A_1 B_1 > + < A_1 B_2 > + < A_2 B_1 > - < A_2 B_2 > \qquad (3)$$

which is bound by 2 for local models. From the CHSH value, it is possible to bind the maximum information that a quantum eavesdropper has on Alice's outcomes for any of the CHSH settings. For example, for $x = 1$ it is bound by the conditional entropy.

Thus, measurements in the test round(s) therefore should be chosen to maximize the CHSH value observed by Alice and Bob. This requires projective measurements in cases involving superposition of the photonic qubit $\{|0 >, |1 >\}$, which is not possible using only single photon detector. To solve this problem, these ideal measurements may be approximated by means of Gaussian operations and photodetectors, all routinely used in labs.

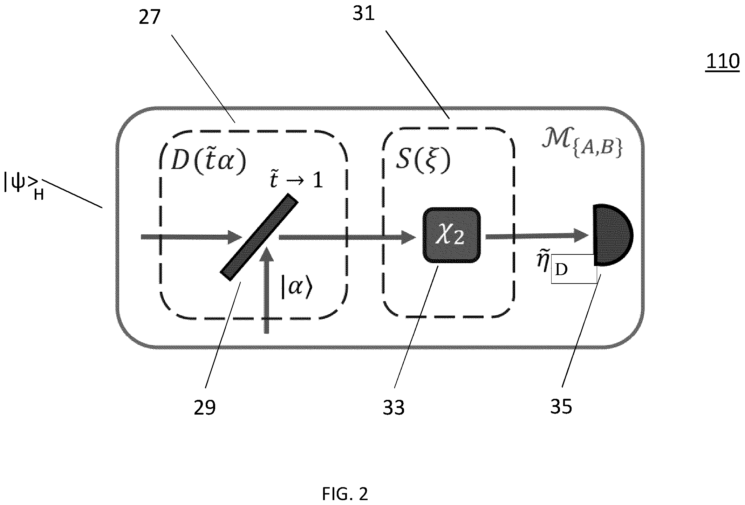

In a further embodiment of the present disclosure a scheme is presented that employs displacement and photo-detection. This embodiment includes a squeezing operation, see FIG. 2. This setup is more robust in terms of imperfections.

FIG. 2 illustrates a measurement system 110 which may be the measurement system $M_A$ or $M_B$, elements 23 and 25 or FIG. 1, respectively. The measurement system 110 comprises a displacement unit 27, a squeezing unit 31 and a single photon detector 35.

As indicated by FIG. 2, the heralded state $|\psi >_H$ of equation (2) is sent to Alice's (Bob's) measurement system $M_A$ ($M_B$). The heralded state is received by the displacement unit 27. The displacement unit 27 is configured to displace the state incoming to the displacement unit 27. Then, the displaced incoming state is sent from the displacement unit 27 towards the squeezing unit 31. The squeezing unit 31 is configured to squeeze the state incoming to the squeezing unit 31. Finally, the displaced and squeezed state is sent by the squeezing unit 31 towards the single photon detector 35 and is measured by the single photon detector 35.

The displacement unit 27 thus implements a displacement operation so as to displace the incoming state. The displacement operation is implemented using a beam splitter 29, whereas the beam splitter may have transmittance $\tilde{t}$, typically having a value close to 1. The displacement operation allows to project on noisy superposition of orthogonal photonic qubit state(s). Thereafter, the displaced state is sent towards the squeezing unit 31. The squeezing unit 31 includes a nonlinear crystal 33, also denoted by the symbol $\chi^{(2)}$ in FIG. 2. The nonlinear crystal 33 is configured to squeeze the state incoming to the squeezing unit 31, thereby enhancing the distinguishability of an arbitrary qubit state spanned by 0 and 1 photon upon a click or no-click event at the detector. This will effectively implement an almost perfect Pauli measurement. Finally, the single photon detector 35 is configured to measure the displaced and squeezed state.

In other words, in this embodiment, we consider a displacement operator, followed by a nonlinear crystal and a single-photon detector with efficiency $\tilde{\eta}_D$, see FIG. 2. The displacement operation allow to project on noisy superposition of orthogonal photonic qubit state while the nonlinear crystal increase the distinguishability between those states. When applied to the heralded state, the resulting measurements $M_A$ and $M_B$ allow getting CHSH violations close to the theoretical maximum and with significant noise robustness.

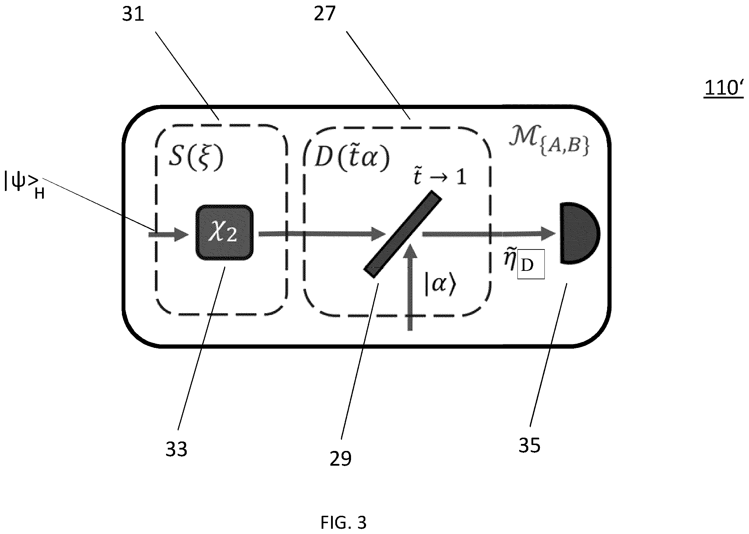

FIG. 3 illustrates further embodiment of the present disclosure. FIG. 3 illustrates a measurement system 110' which is similar to the measurement system 110 of FIG. 2. The measurement system 110' of FIG. 3 may be the measurement system $M_A$ or $M_B$, elements 23 and 25 or FIG. 1, respectively. The measurement system 110' comprises a displacement unit 27, a squeezing unit 31 and a single photon detector 35. These elements may be the same as illustrated in FIG. 2.

As indicated in FIG. 3, the heralded state $|\psi >_H$ of equation (2) is sent to Alice's (Bob's) measurement system $M_A$ ($M_B$). However, for FIG. 3, in comparison to FIG. 2 the order of the displacement unit 27 and squeezing unit 31 is reversed. The heralded state is received by the squeezing unit 31. The squeezing unit 31 is configured to squeeze the state incoming to the squeezing unit 31. The squeezed state is then sent from the squeezing unit 31 to the displacement unit 27. The displacement unit 27 is configured to displace the state incoming to the displacement unit 27, which has been squeezed before by the squeezing unit 31. Finally, the squeezed and displaced state is sent from the displacement unit 27 towards the single photon detector 35 and is measured by the single photon detector 35.

As for FIG. 2, the displacement unit 27 implements a displacement operation so as to displace the incoming state.

The displacement operation is implemented using a beam splitter 29, whereas the beam splitter may have transmittance $\tilde{t}$, typically having a value close to 1. The displacement operation allows to project on noisy superposition of orthogonal photonic qubit state(s).

The squeezing unit 31 includes a nonlinear crystal 33, also denoted by the symbol $\chi^{(2)}$ in FIG. 3 as in FIG. 2. The nonlinear crystal 33 is configured to squeeze the state incoming to the squeezing unit 31, thereby enhancing the distinguishability of an arbitrary qubit state spanned by 0 and 1 photon upon a click or no-click event at the detector. This will effectively implement an almost perfect Pauli measurement.

Finally, the single photon detector 35 is configured to measure the displaced and squeezed state.

In other words, in this embodiment, we consider a squeezing operator followed by a displacement operator, and a single-photon detector with efficiency $\tilde{\eta}_D$, see FIG. 3. The displacement operation of the displacement unit 27 allows to project on noisy superposition of orthogonal photonic qubit state while the nonlinear crystal 33 of the squeezing unit 31 increase the distinguishability between those states. When applied to the heralded state, the resulting measurements $M_A$ and $M_B$ allow getting CHSH violations close to the theoretical maximum and with significant noise robustness.

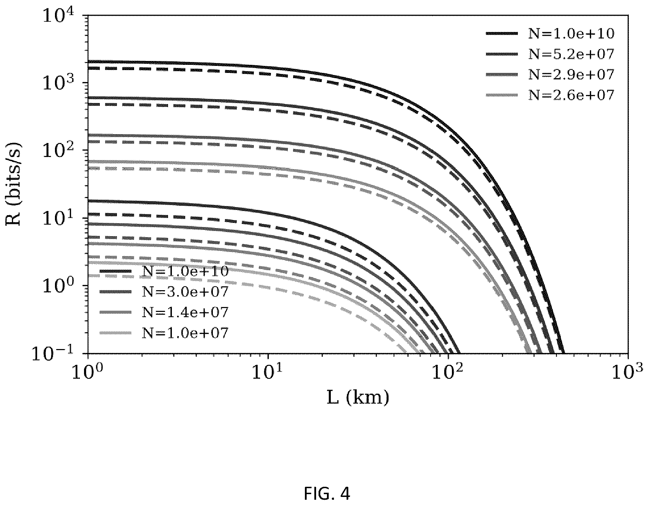

FIG. 4 illustrates key rates as computed according to the embodiments presented. Thus, FIG. 4 illustrates key rates as a function of the distance L for various numbers of rounds N with the DIQKD scenario of FIG. 1 when using the measurement device shown in FIG. 2. In FIG. 4 we show the estimated rates of the present disclosure shown in red as a function of distance and compare it with the rates obtained for the proposal by J. Kołodyński et al. shown in blue. All the calculations where performed including noisy preprocessing, $\eta_L$ = 91%, $T$ = 0:005, $\eta_D$ = 100% (solid lines) and $\eta_D$ = 80% (dashed lines). The key rate becomes smaller than 0:1 bits/s in the range $L \in$ [244; 401] km for the single photon heralding scenario we are proposing (red) and $L \in$ [43; 98] km for the polarization case shown in blue by J. Kołodyński et al. As may be seen from FIG. 4, the rates according to the present disclosure are much better and significantly larger distances are now reachable.

Finally, it should be noted that all previously discussed embodiments are not intended as limitations but serve as examples illustrating features and advantages of the invention. It is to be understood that some or all of the above-described features can also be combined in different ways.

**Acknowledgement**

This work has been partially funded by the European Research Council (ERC) under the European Union's Horizon 2020 research and innovation programme (grant agreement No 834266), and by the European Union's Horizon Europe research and innovation programme (grant agreement No 101114043).

**List of reference signs**

| | |
|---|---|
| 100 | principal setup |
| 1, 3 | single photon sources |
| 5, 7 | beam splitter with transmittance T |
| 9, 11 | lossy channels |
| 13 | beam splitter |
| 15, 17 | photon detectors for heralding entangled state |
| 19, 21 | lossy channel(s) for sending entangled state to elements 23, 25 |
| 23, 25 | measurement devices/systems ($M_A$: Alice's side, $M_B$: Bob's side) |
| 110, 110' | measurement system including displacement unit and squeezing unit |
| 27 | displacement unit |
| 29 | beam splitter for displacement unit |
| 31 | squeezing unit |
| 33 | nonlinear crystal $\chi(2)$ |
| 35 | single photon detector |
| $\lvert\alpha\rangle$ | coherent state for displacement operation |
| $\lvert\psi\rangle_H$ | heralded state |
| x, y | labels/indexes/rounds of measurement performed by Alice (x) and Bob (y), $x \in$ {1,2}; $y \in$ {1,2,3} |
| a, b | labels/indexes of outcomes; a, b $\in$ {-1, +1} |

**Claims**

1. A method of exchanging private communication in a network system, the network system including at least two communication units, and a central station; each communication unit including a photon source (1, 3), a beam splitter (5, 7), and a measurement device (23, 25); the central station including a further beam splitter (13) and two photo detectors (15, 17); the method comprising:

   for each communication unit,

   > preparing, by the communication unit, a photon;
   > sending the prepared photon to the beam splitter (5, 7) of the communication unit, the beam splitter defining two optical modes;
   > sending one of the two optical modes to the central station;
   > sending the other one of the two optical modes to the measurement device (23, 25) of the communication unit;

   combining, at the central station, the optical modes received from each communication unit using the further beam splitter (13), the further beam splitter (13) providing two output modes;
   measuring, by the two photo detectors (15, 17), the output modes provided by the further beam splitter (13);
   in case exactly one of the two photo detectors (15, 17) clicks, announcing the result of the measurement, thereby preparing a single-photon entangled state for the respective other one of the two optical modes of each communication unit;

   > measuring the other one of the two optical modes by the respective measurement device (23, 25) of each communication unit, to observe a violation of a Bell inequality; and
   > generating a secret key based on the observed Bell non-local correlations.

2. The method according to claim 1, wherein preparing the photon by the respective communication unit is performed either on demand or heralded.

3. The method according to claim 1 or 2, wherein each beam splitter (5, 7) of the respective communication unit as well as the further beam splitter (13) have varying transmittance.

4. The method according to any one of claims 1 to 3, wherein the other one of the two optical modes is an incoming mode for the respective measurement device (23, 25), wherein measuring the incoming mode comprises preparing a mode to be measured by a displacement step displacing the incoming mode and then measuring the mode to be measured.

5. The method according to claim 4, wherein preparing the mode to be measured further includes a squeezing step of squeezing the incoming mode either before or else after the displacement step.

6. The method according to claim 4 or 5, wherein observing a violation of a Bell inequality is performed using a Clauser-Horne-Shimony-Holt, CHSH, inequality.

7. The method according to any one of the preceding claims, wherein the distance between each of the communication units and the central station is the same, respectively.

8. The method according to any one of the preceding claims, wherein the further beam splitter (13) is a balanced beam splitter.

9. A network system configured for private communication, comprising

   at least two communication units, each of the communication units including a photon source (1, 3), a beam splitter (5, 7), and a measurement device (23, 25);
   a central station including a further beam splitter (13) and two photo detectors (15, 17);
   wherein each communication unit is configured to:

   > prepare a photon;
   > send the prepared photon to the beam splitter (5, 7) of the communication unit, wherein the beam splitter (5, 7) is configured to define two optical modes;

send one of the two optical modes to the central station;
send the other one of the two optical modes to the measurement device (23, 25) of the communication unit;

wherein the central station is configured to combine the optical modes received from each communication unit using the further beam splitter (13), wherein the further beam splitter (13) is configured to provide two output modes;
wherein each of the two photo detectors is configured to measure one of the output modes provided by the further beam splitter (13);
wherein in case only one of the two photo detectors clicks

the central station is configured to announce the result of the measurement in case exactly one of the two photo detectors clicks, thereby preparing a single-photon entangled state for the respective other one of the two optical modes of each communication unit; and
the respective measurement device of each communication unit is configured to measure the other one of the two optical modes by the respective measurement device (23, 25) of each communication unit, to observe a violation of a Bell inequality; and
the respective measurement device (23, 25) of each communication unit is configured to generate a secret key based on the observed Bell non-local correlations.

10. The system according to claim 9, wherein the respective communication unit is configured to prepare the photon either on demand or heralded.

11. The system according to claim 9 or 10, wherein each beam splitter (5, 7) of the respective communication unit as well as the further beam splitter (13) have varying transmittance.

12. The system according to any one of claims 9 to 11, wherein the other one of the two optical modes is an incoming mode for the respective measurement device (23, 25), wherein each of the measuring devices is configured to prepare a mode to be measured by a displacement step displacing the incoming mode and then to measure the mode to be measured.

13. The system according to claim 12, wherein each of the measuring devices (23, 25) is configured to prepare the mode to be measured by including a squeezing step of squeezing the incoming mode either before or else after the displacement step .

14. The system according to claim 12 or 13, wherein each of the measuring devices (23, 25) is configured to observe a violation of a Bell inequality by using a Clauser-Horne-Shimony-Holt, CHSH, inequality.

15. The system according to any one of the preceding claims 9 to 14, wherein the distance between each of the communication units and the central station is the same, respectively.

FIG. 1

FIG. 2

FIG. 3

FIG. 4

## EUROPEAN SEARCH REPORT

Application Number

EP 24 38 3018

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MONIKA E MYCROFT ET AL: "Proposal for distribution of multi-photon entanglement with optimal rate-distance scaling", ARXIV.ORG, CORNELL UNIVERSITY LIBRARY, 201 OLIN LIBRARY CORNELL UNIVERSITY ITHACA, NY 14853, 10 November 2022 (2022-11-10), XP091364886, | 1-4,6,7, 10-12, 14,15 | INV. H04L9/08 H04B10/70 |
| Y | * Sections I, II.B, II.E.1; Appendix G; figures 1,18 * | 5,13 | |
| X | YUAN-MEI XIE ET AL: "Overcoming the rate-distance limit of device-independent quantum key distribution", ARXIV.ORG, CORNELL UNIVERSITY LIBRARY, 201 OLIN LIBRARY CORNELL UNIVERSITY ITHACA, NY 14853, 2 April 2021 (2021-04-02), XP081930883, DOI: 10.1364/OL.417851 | 1-4, 6-12,14, 15 | |
| Y | * pages 1,2; figure 1 * | 5,13 | |
| Y | ENKY OUDOT ET AL: "Realistic Bell tests with homodyne measurements", ARXIV.ORG, CORNELL UNIVERSITY LIBRARY, 201 OLIN LIBRARY CORNELL UNIVERSITY ITHACA, NY 14853, 2 February 2024 (2024-02-02), XP091680038, * section VI * | 5,13 | TECHNICAL FIELDS SEARCHED (IPC) H04L H04B |

The present search report has been drawn up for all claims

| Place of search | Date of completion of the search | Examiner |
|---|---|---|
| Munich | 4 March 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

**EP 4 716 147 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. LUCAMARINI et al.** Overcoming the rate-distance barrier of quantum key distribution without using quantum repeaters. *Nature*, 2018, vol. 557, 400

- **J. F. CLAUSER ; M. A. HORNE ; A. SHIMONY ; R. A. HOLT**. *Phys. Rev. Lett.*, 1969, vol. 23, 880